# EUROPÄISCHE PATENTSCHRIFT

(11) **EP 1 936 211 B1**
(45) Veröffentlichungstag und Bekanntmachung des Hinweises auf die Patenterteilung: **18.08.2010**
(21) Anmeldenummer: 07023097.4
(22) Anmeldetag: 29.11.2007
(51) Int. Cl.: F16B 11/00, F28F 9/16

(54) **Verfahren zum Einkleben von Rohren in Platten**
Method for cementing pipes in boards
Procédé de collage de tuyaux dans des plaques

(30) Priorität: 21.12.2006 DE 102006060683
(43) Veröffentlichungstag der Anmeldung: 25.06.2008
(73) Patentinhaber: Robert Bosch GmbH, 70442 Stuttgart (DE)
(72) Erfinder: Clement, Uwe, 73114 Schlat (DE); von Garnier, Kai, 73779 Deizisau (DE)

(56) Entgegenhaltungen:
- GB-A- 2 134 430
- US-A- 4 295 522
- US-A- 5 002 119
- US-A1- 2002 162 648

## Beschreibung

Die Erfindung betrifft ein Verfahren zum Einkleben von Rohren in Platten nach dem Oberbegriff des Patentanspruches 1.

Im Bereich der Heizungs- und Verfahrenstechnik werden häufig Rohrbündel-Wärmeübertrager eingesetzt. Bei diesem Wärmeübertrager-Typ müssen die Rohre an beiden Enden mit einer Platte verbunden werden. Dies erfolgt beispielsweise durch Schweißen, Löten und auch Kleben.

Beim Kleben ist es dabei zweckmäßig, einen fließfähigen Klebstoff, der beispielsweise auch in Form einer Vergussmasse ausgebildet sein kann, zu verwenden, um eine möglichst stabile und robuste Verbindung zwischen den Rohren und den Platten zu erreichen. Durch die Fließeigenschaft des Klebers werden Spalte und Hinterschnitte ausgefüllt, so dass die Klebeoberfläche vergrößert und damit die Klebekraft erhöht wird.

Nach dem Stand der Technik werden die Platten in einer horizontalen Lage verklebt, so dass sich der Kleber aufgrund des Schwerkrafteinflusses gleichmäßig ringförmig in den um die Rohre verlaufenden Klebespalt verteilt. Diese Herstellungsweise hat zur Folge, dass jede Platte separat verklebt und an- bzw. ausgehärtet werden muss.

Die GB 2 134 430 A zeigt eine durch Verkleben hergestellte Rohr- und Plattenverbindung, wobei in den Platten die Öffnungen zur Aufnahme der Rohre Aufweitungen besitzen, die das Einbringen des Klebers ermöglichen.

Der Erfindung liegt daher die Aufgabe zugrunde, ein Verfahren zum Einkleben von Rohren in Platten zu optimieren.

Erfindungsgemäß wird dies mit den Merkmalen des Patentanspruches 1 gelöst. Vorteilhafte Weiterbildungen sind den Unteransprüchen zu entnehmen.

Das Verfahren ist dadurch gekennzeichnet, dass beim Auftragen des Klebers die Platten senkrecht und die Rohre waagerecht angeordnet werden, und dass der Kleber jeweils nur um die nach oben gerichteten Rohrhälften aufgetragen wird. Mit dem erfindungsgemäßen Verfahren wird die Gesamtklebeprozesszeit reduziert, da vor dem An- oder Aushärten des Klebers dieser auf beide Platten aufgetragen werden kann. Dies erfolgt vorzugsweise gleichzeitig, so dass die Klebeverbindungen auf beiden Platten gleichzeitig oder in selektiven Teilbereichen an- oder ausgehärtet werden können, beispielsweise durch eine Wärmebehandlung. Es muss daher nicht abgewartet werden, bis die Klebestellen auf der einen Platte an- oder ausgehärtet sind und anschließend die andere Platte geklebt und an- oder ausgehärtet werden, so dass sich die Gesamtzeit und der Handhabungsaufwand reduziert.

Die Zeichnungen stellen ein Ausführungsbeispiel der Erfindung dar. Es zeigt:
- Fig. 1: eine Seitenansicht eines Rohrbündel-Wärmeübertragers beim Kleben nach dem Stand der Technik,
- Fig. 2: eine Aufsicht auf eine Platte zu Fig. 1,
- Fig. 3: eine Seitenansicht eines Rohrbündel-Wärmeübertragers beim Auftragen von Kleb- stoff gemäß der Erfindung,
- Fig. 4: eine Aufsicht auf eine Platte zu Fig. 3,
- Fig. 5: eine Seitenansicht eines Rohrbündel-Wärmeübertragers gemäß der Erfindung nach dem Aushärten des Klebers und
- Fig. 6: eine Aufsicht auf eine Platte zu Fig. 5.

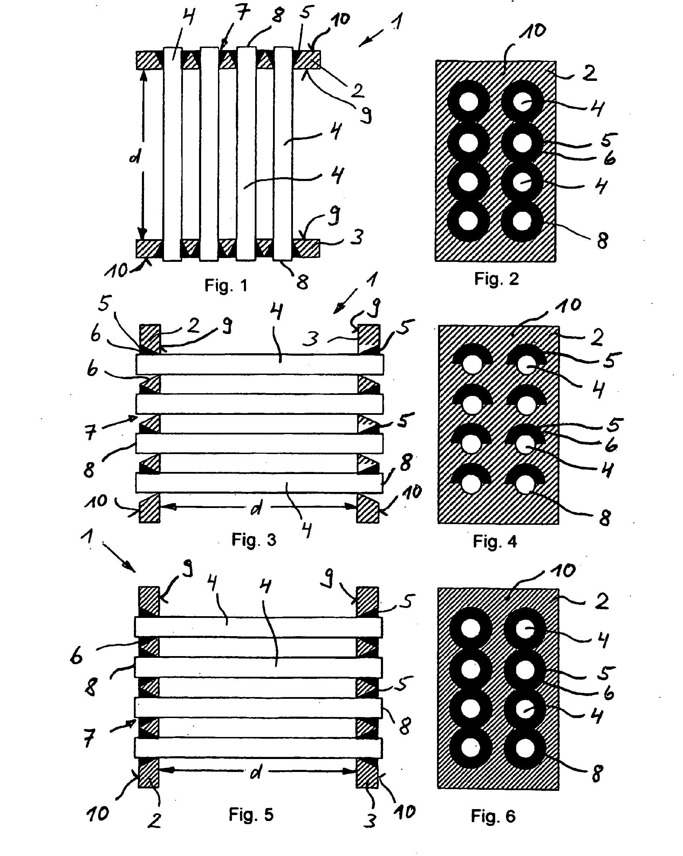

Die Fig. 1 zeigt einen Rohrbündel-Wärmeübertrager 1 beim Kleben nach dem Stand der Technik. Er umfasst zwei Platten 2, 3 mit dazwischen verlaufenden Rohren 4, die mittels eines Klebers in die Platten 2, 3 eingeklebt werden. Dabei wird der Kleber 5 zunächst auf der oberen Platte 2 um den gesamten Rohrumfang in die Klebespalte 6 dosiert, wobei sich die Platte 2 in einer waagerechten und die Rohre 4 in einer senkrechten Lage befinden.

Durch den Schwerkrafteinfluss fließt der Kleber 5 in die Klebespalte 6 zwischen Platte 2 und Rohre 4. Nach dem An- bzw. Aushärten, beispielsweise in einem Wärmebehandlungsprozess, wird der Rohrbündel-Wärmeübertrager 1 gewendet, so dass sich die Lage der Platten 2 und 3 austauscht. Anschließend wird die danach oben liegende Platte 3 in gleicher Weise verklebt und ausgehärtet.

Bei dem erfindungsgemäßen Verkleben gemäß Fig. 3 werden die Platten 2, 3 senkrecht und die Rohre 4 waagerecht angeordnet. Auch hier überbrücken die Rohre 4 den Abstand d zwischen den beiden Platten 2, 3 und werden in Öffnungen 7 in die Platten 2, 3 eingeklebt. Die Öffnungen können als Sack- oder Durchgangslöcher ausgebildet sein, und die Rohrenden 8 der Rohre 4 können bündig mit den Innenseiten 9 der Platten 2, 3, im Inneren der Öffnungen 7 in den Platten 2, 3 oder bündig mit den Außenseiten 10 der Platten 2, 3 angeordnet werden, oder wie in Fig. 3 dargestellt, über die Außenseiten 10 der Platten 2, 3 hinausragen.

Zum Kleben des Rohrbündel-Wärmeübertragers 1 werden die Platten 2, 3 senkrecht und die Rohre 4 waagerecht angeordnet. Die Rohre 4 sind in beide Platten 2, 3 vormontiert und der Kleber 5 wird in die Klebespalte 6 auf beiden Platten 2, 3 dosiert. Vom Auftragen des Klebers 5 bis zum An- oder Aushärten des Klebers 5 verbleiben die Platten 2, 3 in der senkrechten Lage, auch wenn zum An- oder Aushärten ein Wärmebehandlungsprozess durchgeführt wird.

Der Kleber 5 kann ein bei Raumtemperatur standfester Kleber sein, der auf beiden Seiten des Rohrbündel-Wärmeübertragers 1 jeweils nur um die nach oben gerichtete Rohrhälften aufgetragen wird, wie in den Figuren 3 und 4 dargestellt ist. Dadurch wird nur die Hälfte der sonst üblichen Zeit zum Auftragen des Klebers 5 benötigt. Der Kleber 5 kann auf beide Platten 2, 3 nacheinander oder auch gleichzeitig aufgetragen werden. Anstatt eines standfesten Klebers kann auch ein in fester Form vorliegender Kleber verwendet werden. Dieser kann manuell in die Klebespalte 6 eingelegt werden, so dass keine Dosieranlage wie für einen fließfähigen Kleber 5 erforderlich ist.

Durch die Verwendung eines bei höherer Temperatur fließfähigen Klebers 5 und eines definierten Aufheizvorgangs wird durch eine Wärmebehandlung erreicht, dass durch den Schwerkrafteinfluss und die Kapillarwirkung der Klebstoff um die noch nicht mit Kleber 5 benetzte Fläche der Klebespalte 6 fließt und dadurch eine dichte und feste Verbindung erreicht, wie sie in den Figuren 5 und 6 dargestellt ist. Durch den Aufheizvorgang kann die Menge und Geschwindigkeit des fließenden Klebers 5 beeinflusst werden, so dass sich der Kleber 5 ausreichend um den gesamten Umfang der Rohre 4 verteilt.

Bei dem erfindungsgemäßen Kleben eines Rohrbündel-Wärmeübertragers 1 ist somit nur ein Prozess zum An- oder Aushärten des Klebers 5, beispielsweise in einem Wärmebehandlungsprozess, erforderlich, bei dem der Kleber 5 in beiden Platten 2, 3 gleichzeitig an- oder ausgehärtet wird. Damit ergibt sich eine deutliche Verkürzung des Herstellungsprozesses. Ein weiterer Vorteil ist, dass auch vereinfacht Stellen geklebt werden können, die sonst nur sehr aufwendig und schwer zugänglich sind.

## Patentansprüche

1. Verfahren zum Einkleben von Rohren (4) in zwei Platten (2, 3), die in einem Abstand (d) parallel zueinander angeordnet sind, wobei die Rohre (4) den Abstand (d) der Platten (2, 3) überbrückend von einer Platte (2) zur anderen Platte (3) verlaufend angeordnet und mittels eines Klebers (5) in Öffnungen (7) in den Platten (2, 3) eingeklebt werden, wobei der Kleber (5) eine Klebeverbindung zwischen den Platten (2, 3) und den in die Öffnungen (7) eingesetzten Rohren (4) bildet,
**dadurch gekennzeichnet, dass** beim Auftragen des Klebers (5) die Platten (2, 3) senkrecht und die Rohre (4) waagerecht angeordnet werden, und dass der Kleber (5) jeweils nur um die nach oben gerichteten Rohrhälften aufgetragen wird.

2. Verfahren nach Anspruch 1,
**dadurch gekennzeichnet, dass** die Platten (2, 3) vom Auftragen des Klebers (5) bis zum An- oder Aushärten des Klebers (5) in einer senkrechten Lage verbleiben.

3. Verfahren nach den Ansprüchen 1 oder 2,
**dadurch gekennzeichnet, dass** der auf die zwei Platten (2, 3) aufgetragene Kleber (5) gleichzeitig oder in selektiven Teilbereichen an- bzw. ausgehärtet wird.

4. Verfahren nach einem der Ansprüche 1 bis 3,
**dadurch gekennzeichnet, dass** zum Kleben ein Kleber (5) aufgetragen wird, der vor dem Aushärten für eine gewisse Zeit fließfähig ist oder durch eine Wärmebehandlung für eine gewisse Zeit fließfähig gemacht werden kann und anschließend aushärtet.

5. Verfahren nach einem der Ansprüche 1 bis 4,
**dadurch gekennzeichnet, dass** der aufgetragene Kleber (5) durch Wärmebehandlung in einem Prozess an- oder ausgehärtet wird.

6. Verfahren nach einem der Ansprüche 1 bis 5,
**dadurch gekennzeichnet, dass** die Öffnungen (7) in den Platten (2, 3) derart ausgebildet sind, dass sie einen Klebespalt (6) zum Einbringen von Kleber (5) für das Einkleben der Rohre (4) bilden.

7. Verfahren nach einem der Ansprüche 1 bis 6,
**dadurch gekennzeichnet, dass** die Klebespalte (6) sich konisch erweiternd ausgebildet sind und/oder sich mit einer Wölbung nach außen aufweiten.

8. Verfahren nach Anspruch 7,
**dadurch gekennzeichnet, dass** der Kleber (5) von den außen und/oder innen liegenden Seiten (10) der Platten (2, 3) aufgetragen wird.

9. Anwendung eines Verfahrens nach einem der Ansprüche 1 bis 8 zum Einkleben von Rohren (4) in einen Rohrbündel-Wärmeübertrager (1), insbesondere von Rohren (4) aus Kunststoff.

## Claims

1. A method for gluing tubes (4) into two plates (2, 3) which are arranged parallel to one another at a distance (d), wherein the tubes (4) are arranged to run from one plate (2) to the other plate (3) covering the distance (d) between the plates (2, 3) and are glued into the plates (2, 3) by means of an adhesive (5) in apertures (7), wherein the adhesive (5) forms an adhesive connection between the plates (2, 3) and the tubes (4) inserted into the apertures (7), **characterised in that** when applying the adhesive (5), the plates (2, 3) are arranged perpendicularly and the tubes (4) are arranged horizontally and that the adhesive (5) is in each case only applied around the upwardly directed tube halves.

2. The method according to claim 1, **characterised in that** the plates (2, 3) remain in a perpendicular position from application of the adhesive (5) until the partial or full curing of the adhesive (5).

3. The method according to claims 1 or 2, **characterised in that** the adhesive (5) applied to the two plates (2, 3) is partially or fully cured simultaneously or in selective partial regions.

4. The method according to any one of claims 1 to 3, **characterised in that** an adhesive (5) is applied for gluing which is flowable for a certain time before the full curing or can be made flowable for a certain time by means of a heat treatment and then fully cured.

5. The method according to any one of claims 1 to 4, **characterised in that** the applied adhesive (5) is partially or fully cured in one process by heat treatment.

6. The method according to any one of claims 1 to 5, **characterised in that** the apertures (7) in the plates (2, 3) are configured in such a manner that they form an adhesive gap (6) for inserting adhesive (5) for gluing in the tubes (4).

7. The method according to any one of claims 1 to 6, **characterised in that** the adhesive gaps (6) are configured to be conically expanding and/or expand outwards with a bulge.

8. The method according to claim 7, **characterised in that** the adhesive (5) is applied from the outer and/or inner sides (10) of the plates (2, 3).

9. Application of a method according to any one of claims 1 to 8 for gluing tubes (4) into a tube bundle heat exchanger (1), in particular tubes (4) made of plastic.

## Revendications

1. Procédé pour coller des tuyaux (4) dans deux plaques (2, 3), qui sont disposées parallèlement entre elles à une distance (d), les tuyaux (4) étant agencés en s'étendant d'une plaque (2) à l'autre plaque (3) en surmontant l'espacement (d) des plaques (2, 3) et étant collés au moyen d'une colle (5) dans des ouvertures (7) dans les plaques (2, 3), la colle (5) formant une liaison collée entre les plaques (2, 3) et les tuyaux (4) insérés dans les ouvertures (7),
**caractérisé en ce que**, lors de l'application de la colle (5), les plaques (2, 3) sont disposées verticalement et les tuyaux (4) horizontalement, et **en ce que** la colle (5) est appliquée à chaque fois uniquement autour des moitiés de tuyau dirigées vers le haut.

2. Procédé selon la revendication 1,
**caractérisé en ce que** les plaques (2, 3) restent dans une position verticale depuis l'application de la colle (5) jusqu' au début du durcissement ou jusqu'au durcissement final de la colle (5).

3. Procédé selon la revendication 1 ou 2,
**caractérisé en ce que** la colle (5) appliquée sur les deux plaques (2, 3) a commencé à durcir ou durcit en même temps ou dans des zones partielles sélectives.

4. Procédé selon l'une quelconque des revendications 1 à 3,
**caractérisé en ce que**, pour le collage, on applique une colle (5) qui est fluide avant le durcissement pour un certain temps ou peut être rendue fluide par un traitement thermique pour un certain temps et durcit ensuite.

5. Procédé selon l'une quelconque des revendications 1 à 4,
**caractérisé en ce que** la colle (5) appliquée subit un début de durcissement ou durcit par un traitement thermique dans un processus.

6. Procédé selon l'une quelconque des revendications 1 à 5,
**caractérisé en ce que** les ouvertures (7) dans les plaques (2, 3) sont conçues de telle sorte qu'elles forment une fente de collage (6) pour l'introduction de colle (5) pour le collage des tuyaux (4).

7. Procédé selon l'une quelconque des revendications 1 à 6,
**caractérisé en ce que** les fentes de collage (6) sont conçues en s'élargissant en forme de cône et/ou s'élargissent avec une courbure vers l'extérieur.

8. Procédé selon la revendication 7,
**caractérisé en ce que** la colle (5) est appliquée à partir des côtés (10), situés à l'extérieur et/ou à l'intérieur, des plaques (2, 3).

9. Application d'un procédé selon l'une quelconque des revendications 1 à 8 pour le collage de tuyaux (4) dans un échangeur de chaleur à faisceau de tuyaux (1), en particulier des tuyaux (4) en plastique.
